(19)

Europäisches
Patentamt
European
Patent Office
Office européen
des brevets

(11) **EP 2 011 403 B1**

(12) **EUROPEAN PATENT SPECIFICATION**

(45) Date of publication and mention
of the grant of the patent:
**22.05.2013  Bulletin 2013/21**

(51) Int Cl.:
*A23G 3/48* *(2006.01)*     *A23G 3/50* *(2006.01)*
*A23L 1/164* *(2006.01)*

(21) Application number: **07741334.2**

(22) Date of filing: **10.04.2007**

(86) International application number:
**PCT/JP2007/057898**

(87) International publication number:
**WO 2007/117012 (18.10.2007 Gazette 2007/42)**

(54) **RICE CAKE AND PROCESS FOR PRODUCING THE SAME**

REISKUCHEN UND HERSTELLUNGSVERFAHREN DAFÜR

GATEAU DE RIZ ET SON PROCEDE DE PRODUCTION

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **10.04.2006  JP 2006107266**

(43) Date of publication of application:
**07.01.2009  Bulletin 2009/02**

(73) Proprietor: **Bourbon Corporation
Kashiwazaki-shi, Niigata 945-8611 (JP)**

(72) Inventors:
  • **MINEO, Shigeru
    Kashiwazaki-shi
    Niigata 945-0055 (JP)**
  • **TAKEISHI, Kinji
    Niigata-shi
    Niigata 956-0841 (JP)**
  • **SEKIMORI, Takanori
    Kashiwazaki-shi
    Niigata 945-0114 (JP)**
  • **SAKUMA, Tetsuo
    Kashiwazaki-shi
    Niigata 945-8611 (JP)**

(74) Representative: **Gillard, Richard Edward
Elkington and Fife LLP
Thavies Inn House
3-4 Holborn Circus
London EC1N 2HA (GB)**

(56) References cited:
**EP-A1- 1 582 102        WO-A1-02/23997
WO-A1-97/42827         WO-A2-2005/025327
JP-A- 7 163 297          JP-A- 07 099 880
JP-A- 11 116 602         JP-A- 2002 095 421
JP-A- 2002 095 421       JP-A- 2005 287 454
JP-A- 2005 328 776       JP-A- 2006 217 813
US-A1- 2005 053 715      US-A1- 2005 118 326
US-A1- 2006 088 647      US-A1- 2006 150 828**

• HU P ET AL: "Starch digestibility and the
estimated glycemic score of different types of
rice differing in amylose contents", JOURNAL OF
CEREAL SCIENCE, ACADEMIC PRESS LTD, XX
LNKD- DOI:10.1016/J.JCS.2004.06.001, vol. 40,
no. 3, 1 November 2004 (2004-11-01), pages
231-237, XP004676692, ISSN: 0733-5210
• MUNDY K J; GODBER J S; DABNEY S M; RAO R:
"PROCESSING CHARACTERISTICS OF LONG-
GRAIN RICE GROWN UNDER SPRINKLER OR
FLOOD IRRIGATION", CEREAL CHEMISTRY
CHEMISTRY, vol. 66, 1989, pages 42-46,
XP002597909,

**EP 2 011 403 B1**

**Description**

FIELD OF THE INVENTION

The present invention relates to a rice snack and a method for producing the same. More particularly, the present invention relates to a rice snack having excellent taste by which drastic increase in blood sugar level will not be caused and from which prophylaxis effect on lifestyle related diseases such as diabetes and obesity can be anticipated, and a method for producing the rice snack.

BACKGROUND ART

Hitherto, rice snacks such as cubic rice crackers ("Arare"), sliced and dried rice cake cubes ("Okaki") and Japanese rice crackers ("Senbei") have been produced from a cereal powder having rice as the main starting material. Most of the rice varieties which have currently been produced in Japan are short-grain strains of Japonica rice, and the Japonica rice are frequently used also as a starting flour for producing rice snack. However, from a worldwide standpoint, long-grain strains of Indica rice are produced more abundantly than the Japonica rice.
Thus, it has been tried to use Indica rice as a starting flour for producing rice snacks for the purpose of stable acquisition of the starting material and reduction of the cost. In general, Indica rice has a characteristic of containing amylose in a higher amount as compared with Japonica rice while starch matter in a lesser amount. In this connection, rice containing amylose in about 25 % or more is called high-amylose rice, and most of Indica rices are classified into the high-amylose rice.
However, the high-amylose rice is rather hard to gelatinize than the Japonica rice, poor in glutinousness and stiff, and tends to be retrograded upon cooling. Thus, rice snacks produced from such high-amylose rice are very stiff due to their unsatisfactory puffing.
Thus, it has been conducted for improving the gelatinization property of the high-amylose rice to employ alkaline calcium agents or some degradation enzymes or to add cornstarch and the like to the high-amylose rice (Patent References 1 to 3*). However, the addition of such characteristic improvers may affect the original flavor and taste of the rice snacks.
By the way, when the Japonica rice usually used in the production of rice snacks is used as a starting flour, rice snacks having good flavor and taste can be produced, but the increased ingestion of sugar cannot be avoided mainly due to the high content of starch.
It is generally believed that the ingestion of sugar in a large amount causes drastic increase in the blood sugar level, which promotes the secretion of insulin, brings about insulin resistance and causes visceral fat obesity, thus increasing the risk of the so-called metabolic syndrome (visceral steatosis) with a plurality of factors such as diabetes, hyperlipidemia and hypetension. Thus, it is important to regulate such increase in the blood sugar level, particularly drastic increase.

    * Patent Reference 1: Japanese Patent Laid-Open Publication No. 191893/1998,
    Patent Reference 2: Japanese Patent Laid-Open Publication No. 163297/1995, and
    Patent Reference 3: Japanese Patent Publication No. 47826/1991.

DISCLOSURE OF THE INVENTION

PROBLEMS TO BE SOLVED BY THE INVENTION

The present invention provides a rice snack having excellent taste by which drastic increase in blood sugar level will not be caused and from which prophylaxis effect on lifestyle related diseases such as diabetes and obesity can be anticipated, and a method for producing the rice snack.

MEANS FOR SOLVING THE PROBLEMS

In order to solve the problems, the rice snack according to the present invention is characterized by being obtained by using a starting flour which contains a combination of a cereal powder comprising high-amylose rice, having an amylose content of 25% or more, as the main raw material with a dietary fiber, wherein said starting flour contains said dietary fiber in an amount of 7 - 12 % by weight and wherein said dietary fiber is an indigestible dextrin.
Such rice snacks according to the present invention preferably include the one in which the high-amylose rice is the Indica rice.
Such rice snacks according to the present invention preferably include the one in which the glycemic index (GI) is in the range of less than 68.

Furthermore, the method for producing a rice snack according to the present invention is characterized by comprising the step of roasting a dough prepared by press-molding a starting flour, which contains a combination of a cereal powder having high-amylose rice, having an amylose content of 25% or more, as the main raw material with a dietary fiber, by the indirect roasting method, wherein said starting flour contains said dietary fiber in an amount of 7 - 12 % by weight and wherein said dietary fiber is an indigestible dextrin.

EFFECTS OF THE INVENTION

Since the rice snack according to the present invention is obtained from a starting flour which contains a combination of a cereal powder having high-amylose rice as the main raw material with a dietary fiber, it does not cause the drastic increase in blood sugar level and has an excellent taste.

Thus, the rice snack according to the present invention is excellent as a functional food intended for preventing lifestyle related diseases such as diabetes and obesity as well as a table luxury for tasting flavor, taste and the like.

BRIEFE DESCRIPTION OF THE DRAWINGS

Figure 1 illustrates the change of the blood sugar level of a standard diet and a test diet,
Figure 2 illustrates the change of the blood sugar level of a control diet and a test diet,
Figure 3 illustrates the comparison of the areas below the curves of the blood sugar levels,
Figure 4 illustrates the change of the insulin concentrations of a standard diet and a test diet,
Figure 5 illustrates the change of the insulin concentrations of a control diet and a test diet, and
Figure 6 illustrates the comparison of the areas below the curves of the insulin concentrations of the respective diet groups.

MODES FOR PRACTICING THE INVENTION

Rice Snack

The rice snack according to the present invention is characterized by being obtained by using a starting flour which contains a combination of a cereal powder comprising high-amylose rice, having an amylose content of 25% or more, as the main raw material and a dietary fiber, wherein said starting flour contains said dietary fiber in an amount of 7-12% by weight and wherein said dietary fiber is an indigestible B dextrin.

In this connection, the rice snack means a snack product produced from a cereal as the main starting material. The rice snack according to the present invention includes, for example, Japanese rice crackers, rice crackers, cubic rice crackers, sliced and dried rice snack cubes, sliced and dried rice snacks, salty Japanese rice crackers, the other rice snacks and foods derived therefrom. In addition, the phraseology "the main raw material" means the component having the highest existence ratio.

Furthermore, the high-amylose rice means the rice having an amylose content of about 25% or more. Therefore, Japonica rice which is the Japan type rice plant having an amylose content of about 20% does not correspond to the high-amylose rice according to the present invention. The existing amount of the high-amylose rice in the starting flour is preferably in the range of 60 to 100 % by weight, particularly preferably 80 to 100 % by weight (based on the starting flour as 100 % by weight). In this connection, if the high-amylose rice as the main raw material (that is, as a component having the highest existence ratio) is contained in the starting flour, rice flour and other components having an amylose content of less than 20 % by weight such as Japonica rice may be contained in the starting flour. Such other components include, for example, cornstarch, tapioca starch, potato starch, wheat starch, and the like.

The particularly preferred specific example of the high-amylose rice of the present invention includes, for example, Indica rice. In this connection, the amylose content can be measured by the colorimetric method.

On the other hand, the dietary fiber of the present invention is a indigestible dextrin. The indigestible dextrin may be obtained by heating starch directly or in the small amount of an acid at a temperature of about 120 to 180 °C to give a roasted dextrin, from which the component undegradable by a digestive enzyme such as amylase is purified.

It is important for the starting flour according to the present invention to contain the combination of the high-amylose rice, having an amylose content of 25% or more, and the dietary fiber, wherein said starting flour contains said dietary fiber in an amount of 7-12% by weight and wherein said dietary fiber is an indigestible dextrin.

The starting flour of the present invention contains the dietary fiber preferably in an amount of 7 to 12 % by weight, particularly preferably in an amount of 9 to 10 % by weight (based on the total amount of the starting flour as 100 % by weight). If the content of the dietary fiber is in the range of less than 7 % by weight, the regulating effect on an increase in the blood sugar level cannot be anticipated, and on the other hand, if the content is in excess of 12 % by weight, the taste is undesirably damaged. In this connection, if the starting cereal powder having high-amylose rice as the main raw material comprises the dietary fiber, it is preferred to adjust the total amount of the dietary fibers containing the amount of dietary fiber derived from the starting flour within the range described above.

The rice snack according to the present invention is preferably the one having the glycemic index (GI) of less than 68. The glycemic index (Glycemic Index) herein means the numerical degree of the increase in the blood sugar level after a meal, which is represented by a relative value of an increase in the blood sugar level based on the value 100 in the standard diet (generally glucose).

In general, foods having a high GI value are susceptible to drastic increase in the blood sugar level and thus to an increased value of the blood sugar level, and the secreted amount of insulin is increased and fat is apt to be accumulated in the body. On the other hand, foods having a low GI value exhibits a slow increase in the blood sugar level, saccharides are continuously consumed in a slow rate, and insulin is also maintained at a low level with the maintenance of good energy metabolism, so that fat is hardly be accumulated in the body.

While general rice snacks obtained conventionally from the Japonica rice have a GI value in the range of 85 - 100, the rice snack according to the present invention has a low GI value as described above, and the drastic increase in the blood sugar level is suppressed.

Method for producing rice snack

The method for producing a rice snack according to the present invention is characterized by comprising the step of roasting a dough prepared by press-molding a starting flour, which contains a combination of a cereal powder comprising high-amylose rice, having an amylose content of 25% or more, as the main raw material with a dietary fiber, by the indirect roasting method, wherein said starting flour contains said dietary fiber in an amount of 7-12% by weight and wherein said dietary fiber is an indigestible dextrin.

According to the present invention, a light and soft rice snack having an excellent taste can be easily produced by roasting the dough prepared by press-molding a specific starting flour described above by the indirect roasting method. The indirect roasting method refers to a method in which the upper and lower surfaces of a molded dough to be roasted are inserted between heat transfer plates such as steel plates for indirect roasting through these plates. According to the present invention, it is possible to employ both a method for heating individual molded products (doughs) inserted between heat transfer plates different individually and a method for passing the molded products (doughs) through heated plates which are provided at a certain spacing for roasting the molded products within the passing period. In this connection, it will be difficult to produce a rice snack having an excellent taste with a starting flour comprising high-amylose rice as the main raw material of the starting flour not by the indirect roasting method but by the direct roasting method with a roasting source at some distance.

In the production of the conventional rice snack products, the rice grains for producing a rice snack are subjected to (1) cleansing rice, (2) water dipping, (3) grinding, (4) kneading with steam blowing, (5) water cooling,(6) kneading, (7) press-molding, (8) drying, (9) aging, (10) drying, (11) roasting, (12) flavoring, and (13) packaging. Also in the method for producing the rice snack according to the present invention, it is possible to produce the rice snack according to the present invention with a starting flour containing a starting cereal powder having high-amylose, having an amylose content of 25% or more, rice as the main raw material and a dietary fiber, wherein said starting flour contains said dietary fiber in an amount of 7-12% by weight and wherein said dietary fiber is an indigestible dextrin, by employing a method for roasting a dough prepared by press-molding by the indirect roasting method and, if necessary, conducting the above described respective steps. Since the amount of the dietary fiber is controlled for the purpose of the rice snack of the present invention containing a certain amount of the dietary fiber, it is preferred to adjust the amount of the dietary fiber before practicing the press-molding (7) described above, particularly before the step of grinding (3) or kneading (6).

EXAMPLES

Example 1

After non-glutinous rice produced in Thailand as the Indica rice was subjected to cleansing, followed by dipping in water for 6 hours and milling into flour. To this rice flour were added indigestible dextrin and the other raw materials, and the mixture was diluted with water and subjected to kneading with steam blowing under the condition of 0.03MPa for 13 minutes. The dough balls thus obtained were cooled in a water bath for kneading and then subjected to molding, drying, roasting and flavoring.

Table 1:

| Raw Materials | Composition (parts by weight) |
| --- | --- |
| Indica Rice | 100 |
| Indigestible Dextrin | 10 |
| Tangle Powder | 4 |
| Green Laver | 0.3 |
| Prawn Powder | 0.3 |

Evaluation

The rice snack according to the present invention obtained from Example 1 described above was evaluated according to the following method.

Test method:

(1) Subjects

Volunteers were invited on healthy adults. After detailed explanation on the object, method and result of the test in accordance with Helsinki Declaration, eight male and ten female persons, from whom consent was obtained, were adopted as subjects. In this connection, the subjects are those, from whom no diseases were detected in the periodic medical inspection executed before the test and who were recognized competent for test. Averages of the results of medical inspection of the subjects are shown in Table 2. The results of the three standard diet ingestion tests for judging diabetes were eliminated from the data, if the results were within the criterion of the judgment. The result of standard diet ingestion test as well as the that of medical inspection was also used as the reference data for selecting the subjects.

(2) Test foods

Trelan G75, a glucose solution, (Shimizu Pharmaceutical Co., Ltd.) was used as the standard diet. Trelan G is a colorless viscous solution with sweetness and sourness and is used in the glucose tolerance test for diagnosing diabetes. The ingestion amount of the standard diet was adjusted to 150 ml corresponding to 50 g of sugar.
A rice cracker, which was obtained in Example 1, containing indigestible dextrin in an amount of 12.1 g per 100 g was used as the rice snack according to the present invention, referred to hereinafter as the test diet. The ingestion amount of the test diet was adjusted to 70.6 g corresponding to 50 g of sugar (7.4 g of protein, 5.3 g of lipid and 70.8 g of sugar per 100 g, calorie: 385 kcal).
Also, 60.4 g of a lightly baked Japanese cracker was used as the control diet (commercially available product: 6.3 g of protein, 8.1 g of lipid and 81.9 g of sugar per 100 g, calorie: 423 kcal).

(3) Method for collecting plasma samples

A 50 μl portion of blood was collected from the fingertip of a subject onto a cotton having attached thereto EDTA (ethylenediaminetetraacetic acid) at test times of 0, 15, 30, 45, 60, 90 and 120 minutes. The cotton was placed into a microtube and centrifuged to collect the supernatant of plasma.

(4) Procedure of measurement

Subjects were forbidden to take food and drink except water and to keep from administration of drugs from 9:00 p.m. on the previous day of test to the initiation time of test on the test day. On the day of test, after the rest for 30 minutes, the blood sugar level and the insulin concentration were measured at the times of 15, 30, 45, 60, 90 and 120 minutes after the initiation of diet ingestion at 0 minute. Trelan G (150 ml) as the standard diet, or a jelly beverage (corresponding to 50 g of sugar) as the test diet or the control diet was ingested with a target time of 10 minutes or less.

(5) Method for determining the blood sugar level

A Self-Monitoring Blood Glucose System (Medisafe Reader GR-101, Terumo Co.) was used for determining the blood sugar level. An exclusive centesis needle was used, and a small of blood was used for determining the blood sugar level.

(6) Method for assaying the insulin concentration

Plasma collected in the above paragraph (3) was used for determining the insulin concentration with a human insulin assay kit (Yanaihara Institute) by the antigen-antibody reaction.

(7) Calculation of GI

As regards the standard diet, test was carried out thrice to obtain the areas below the curves of the blood sugar levels, among which the two areas having a coefficient of variation lower than the last one in the range of 25 % or less were selected, and the average of the two areas was provided as the area below the curve of the blood sugar level for the standard diet. In this connection, the area below the blood sugar level curve was calculated according to the method described by Wolever and Jenkins (Reference 1). GI was calculated according to the method described by Sugiyama et al. (Reference 2). The area below the curve of the blood sugar level obtained on the ingestion of the test diet in each subject was divided by the average area to calculate the percentage as the GI. Standard deviation (SD) was calculated from the individual GIs, and the GI which was not within the range of average $\pm$ 2SD was rejected. Then, the GIs within the above described range were averaged again to give the GI for each food.

(8) Calculation of Insulinaemic Index (II)

Insulinaemic Index (II) was calculated for each subject by dividing the area below the insulin concentration curve on ingesting the test diet by the average area below the curve of the standard diet, and thus the percentage of the quotient was provided as II. Standard deviation (SD) was calculated from respective II, and the II which was not within the range of average $\pm$ 2SD was rejected. Then, the IIs within the above described range were averaged again to give the II for each food. Subjects having a HOMA-R as a judging criterion of insulin resistance (Reference 3) in excess of 2.0 was judged insulin resistant and excluded from the calculation of II. The equation of HOMA-R is represented as follows.

$$\text{HOMA-R} = [\text{Fasting blood sugar level(mg/dl)}] \times [\text{Fasting insulin concentration(}\mu\text{U/ml)}] / 405$$

(9) Statistic analysis

The analysis of the control diet and the test diet was conducted by the t-test corresponding thereto, and the significance level in the two-sided test was judged significantly different when the level of significance is less than 5 %.

Table 2: Average physical conditions of subject

| | Number of persons | Age (year) | Height (cm) | Weight (kg) | BMI | Total cholesterol (mg/dl) | HDL-Cho (mg/dl) | LDL-Cho (mg/dl) | Neutral fat (mg/dl) |
|---|---|---|---|---|---|---|---|---|---|
| Total | 18 | 28.4±5.8 | 163.7±6.7 | 55.4±7.2 | 20.7±1.7 | 193±13.6 | 70.6±10.6 | 107±14.3 | 72±44.4 |
| Male | 8 | 31.5±6.1 | 169.3±4.4 | 62.8±2.8 | 22.0±1.7 | 199±12.9 | 62.8±9.1 | 116±9.0 | 89.3±58.8 |
| Female | 10 | 25.9±4.3 | 158.7±3.7 | 49.5±2.5 | 19.7±0.8 | 189±13.0 | 76.9±6.9 | 100±13.8 | 58.9±24.2 |
| Average ± Standard deviation | | | | | | | | | |

Results

Two subjects who were suspected of abnormal glucose tolerance as a result of the standard diet ingestion test were excluded from all of the test results.

As a result of the exclusion of two subjects, the GI was calculated on the basis of 16 subjects. Furthermore, 4 subjects who were newly judged abnormal in insulin resistance (Reference 3) or insulin secretion kinetics on the determination of the insulin concentration were further excluded, and the II was calculated on the basis of 16 subjects.

The GI of the test diet was calculated from the area below the average blood sugar level curve of the standard diet and the area below the blood sugar level curve of the control diet. As a result, the GI of the test diet was 67, and the GI of the control diet was 88 (Table 3).

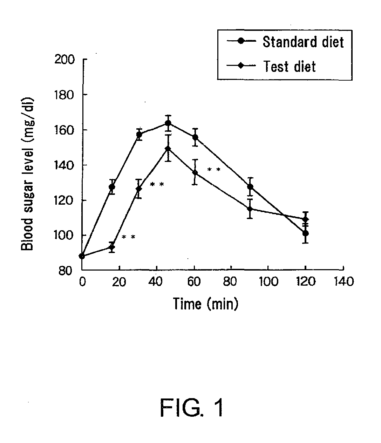

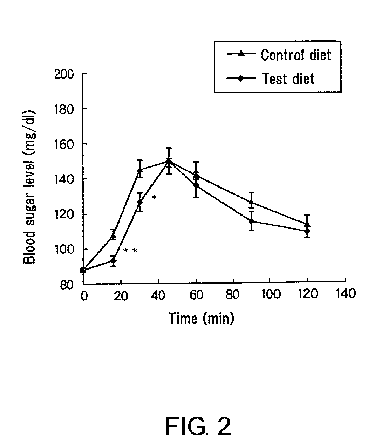

The area below the blood sugar level curve of each diet subjected to test and the GIs of the control diet and the test diet were listed in Table 3. The changes of the blood sugar level on ingesting the standard diet and the test diet were illustrated in Figure 1. Also, the changes of the blood sugar level on ingesting the control diet and the test diet were illustrated in Figure 2.

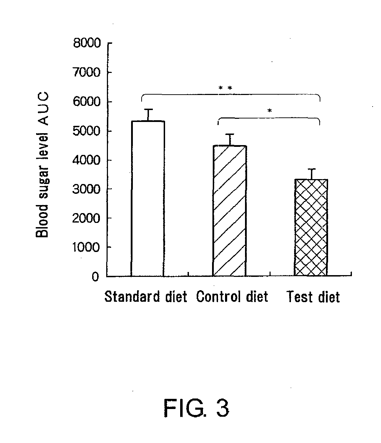

In the comparison of the changes of the blood sugar level on ingesting the standard diet and the test diet, significant differences were observed after 15, 30 and 60 minutes of the ingestion ($P < 0.01$, respectively)(Figure 1). In the comparison of the changes of the change of the blood sugar level on ingesting the control diet and the test diet, significant differences were observed after 15 minutes and 30 minutes of the ingestion ($P < 0.01$, 0.05, respectively) (Figure 2). The blood sugar level reached the highest value after 45 minutes of the ingestion in both the control diet and the test diet, and afterwards the blood sugar levels were gradually lowered (Figure 2). In the comparison of the areas below the blood sugar level curve, the area after ingestion of the test diet was significantly smaller than the ones after ingestion of the standard diet and the control diet($P < 0.01$ and 0.05, respectively)(Figure 3).

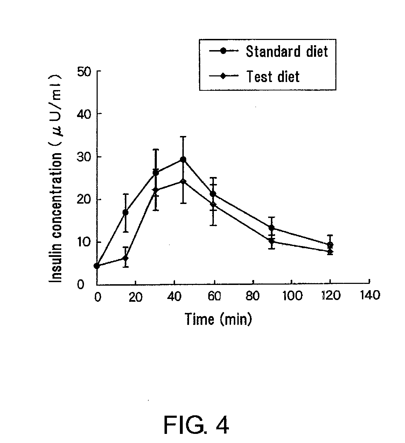

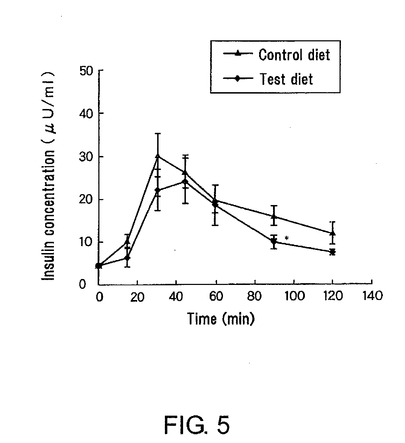

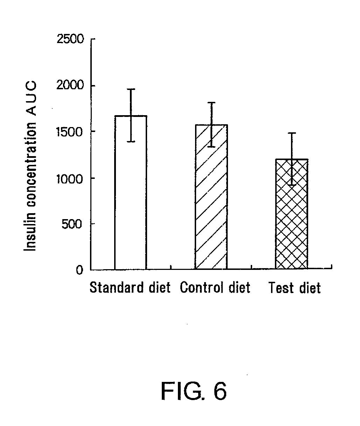

In the similar manner, when the II was calculated, the II of the test diet was 142 and the II of the control diet was 85 (Table 4). In the comparison of the changes of insulin concentration on ingesting the standard diet and the test diet, no significant difference was confirmed (Figure 4). In the comparison on ingesting the control diet and the test diet, significant difference was confirmed after 90 minutes of the ingestion, and insulin secretion after ingestion was recognized in a smaller amount in the test diet than in the control diet ($P < 0.05$)(Figure 5). In the comparison of the areas below the insulin concentration curve, no significant difference was confirmed between the area after ingesting the test diet and the area after ingesting either the standard diet or the control diet, but the area after ingesting the test diet had a tendency to be the smallest (Figure 6).

Table 3: Calculation of GI of test diet (n=16)

|  | Area below blood sugar level curve ((mg/dl)·min) | GI (-) |
|---|---|---|
| Standard diet | 5582 ± 394 | - |
| Control diet | 4777 ± 433 | 88 ± 7 |
| Test diet | 3731 ± 443 | 87 ± 6 |
| Average ± standard error | | |

Table 4: Calculation of II of test diet (n=12)

|  | Area below insulin concentration curve (($\mu$U/ml)·min) | II (-) |
|---|---|---|
| Standard diet | 1672 ± 284 | - |
| Control diet | 1564 ± 247 | 142 ± 35 |
| Test diet | 1191 ± 290 | 85 ± 16 |
| Average ± standard error | | |

Discussion

Sugiyama et al. define the high GI food as GI≧83, the medium GI food as 83>GI>64, and the low GI food as G1≦64 on the basis of the cooked rice. When the glucose solution was used as the criterion, a food having GI≧68 was defined as a high GI food, a food with 68>GI>52 was defined as a medium GI food, and the one with GI≦52 was defined as a low GI food on the basis of the fact that the cooked rice has a GI value of 82 (Reference 4). In this definition, the test diet subjected to the test has a GI value of 67, and is classified into the medium GI foods. The general rice snacks have GI in the range of 85 - 100 and are classified into the high GI foods. The test diet of the test is believed to be a rice cracker really having a low GI value.

It has been confirmed in the comparison with the standard diet that increase in the blood sugar level after ingesting the test diet is significantly suppressed at 15, 30 and 60 minutes. It has been also revealed in the comparison with the control diet that increase in the blood sugar level after ingesting the test diet is significantly suppressed from 15 minutes until 30 minutes. It has been revealed that increase in the insulin concentration after ingesting the test diet is significantly suppressed after 90 minutes of the ingestion as compared with the control diet. It has been confirmed that the insulin secretion kinetics show a variation similar to that of the blood sugar level accompanied with the variation of the blood sugar level.

It has been confirmed from the results described above that the test diet is a rice snack having a low GI value by which drastic increase in blood sugar level will not be caused as compared with the standard diet and the control diet. In addition, the rice snack having a low II value together with a low GI value was successfully produced.

References

1: Wolever TMS, Jenkins DJA: Am. J. Clin. Nutr., 1986;43:pp 167-172.
2: Yoko Wakagi, Michiko Sugiyama, et al.: Health Sciences, 2001; 17:pp133-142.
3: Matthews DR, et al., Homeostasis model assessment: insulin resistance and beta-cell function from fasting plasma glucose and insullin concentrations in man. Diabetologia, 1985 Jul; 28(7): pp 412-419.
4: Michiko Sugiyama, Masako Abe, et al.: Health Sciences, 2000; 16: pp 175-185.

**Claims**

1. A rice snack which is obtained by using a starting flour which contains a combination of a cereal powder comprising high-amylose rice, having an amylose content of 25% or more, as the main raw material with a dietary fiber, wherein said starting flour contains said dietary fiber in an amount of 7 - 12 % by weight and wherein said dietary fiber is an indigestible dextrin.

2. A rice snack according to Claim 1, wherein said high-amylose rice is Indica rice.

3. A rice snack according to Claim 1, wherein the glycemic index (GI) is less than 68.

4. A rice snack according to Claim 1, which is obtained by roasting a dough prepared by press-molding the starting flour by the indirect roasting method.

5. A method for producing a rice snack, which comprises the step of roasting a dough prepared by press-molding a starting flour, which contains a combination of a cereal powder comprising high-amylose rice, having an amylose content of 25% or more, as the main raw material with a dietary fiber, by the indirect roasting method, wherein said starting flour contains said dietary fiber in an amount of 7 - 12 % by weight and wherein said dietary fiber is an indigestible dextrin.

**Patentansprüche**

1. Reis-Snack, der unter Verwendung eines Ausgangsmehls erhalten wird, das eine Kombination aus Folgendem enthält:

    einem Getreidepulver, das hochamylosehaltigen Reis, der einen Amylosegehalt von 25 % oder mehr aufweist, umfasst,
    als Hauptgrundstoff mit einem Ballaststoff, worin das genannte Ausgangsmehl den genannten Ballaststoff in einer Menge von 7-12 Gewichts-% enthält und worin der genannte Ballaststoff ein unverdauliches Dextrin ist.

2. Reis-Snack nach Anspruch 1, worin der genannte hochamylosehaltige Reis Indica-Reis ist.

**3.** Reis-Snack nach Anspruch 1, worin der glykämische Index (GI) kleiner als 68 ist.

**4.** Reis-Snack nach Anspruch 1, der durch Rösten eines Teigs, der durch Pressformen des Ausgangsmehls hergestellt wird, durch das indirekte Röstverfahren erhalten wird.

**5.** Verfahren zur Herstellung eines Reis-Snacks, das Folgendes umfasst: den Schritt des Röstens eines Teigs, der durch Pressformen eines Ausgangsmehls hergestellt wird, das eine Kombination aus Folgendem enthält: einem Getreidepulver, das hochamylosehaltigen Reis, der einen Amylosegehalt von 25 % oder mehr aufweist, umfasst, als Hauptgrundstoff mit einem Ballaststoff, durch das indirekte Röstverfahren, worin das genannte Ausgangsmehl den genannten Ballaststoff in einer Menge von 7-12 Gewichts-% enthält und worin der genannte Ballaststoff ein unverdauliches Dextrin ist.

**Revendications**

**1.** Collation à base de riz qui est obtenue en utilisant une farine de départ qui contient une combinaison de céréales en poudre comprenant du riz à teneur élevée en amylose, ayant une teneur en amylose de 25 % ou plus, comme matière première principale avec des fibres alimentaires, dans laquelle la farine de départ contient lesdites fibres alimentaires dans une quantité de 7 - 12 % en poids et dans laquelle lesdites fibres alimentaires sont une dextrine indigeste.

**2.** Collation à base de riz selon la revendication 1, dans laquelle ledit riz à teneur élevée en amylose est du riz Indica.

**3.** Collation à base de riz selon la revendication 1, dans laquelle l'indice glycémique (IG) est inférieur à 68.

**4.** Collation à base de riz selon la revendication 1, qui est obtenue en faisant griller une pâte préparée par moulage sous pression de la farine de départ par un procédé de grillage indirect.

**5.** Procédé de production d'une collation à base de riz, qui comprend l'étape consistant à faire griller une pâte par moulage sous pression d'une farine de départ qui contient une combinaison de céréales en poudre comprenant du riz à teneur élevée en amylose, ayant une teneur en amylose de 25 % ou plus, comme matière première principale avec des fibres alimentaires, par un procédé de grillage indirect, dans lequel ladite farine de départ contient lesdites fibres alimentaires dans une quantité de 7 - 12 % en poids et dans lequel lesdites fibres alimentaires sont une dextrine indigeste.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10191893 A
- JP 7163297 A
- JP 3047826 A

**Non-patent literature cited in the description**

- **WOLEVER TMS ; JENKINS DJA.** *Am. J. Clin. Nutr.,* 1986, vol. 43, 167-172
- **YOKO WAKAGI ; MICHIKO SUGIYAMA et al.** *Health Sciences,* 2001, vol. 17, 133-142
- **MATTHEWS DR et al.** Homeostasis model assessment: insulin resistance and beta-cell function from fasting plasma glucose and insullin concentrations in man. *Diabetologia,* July 1985, vol. 28 (7), 412-419
- **MICHIKO SUGIYAMA ; MASAKO ABE et al.** *Health Sciences,* 2000, vol. 16, 175-185